# EUROPEAN PATENT APPLICATION

(11) **EP 0 899 931 A1**
(43) Date of publication of application: **03.03.1999**
(21) Application number: 98202657.7
(22) Date of filing: 07.08.1998
(51) Int. Cl.: H04M 11/00

(54) **Remote reading system**

(30) Priority: 08.08.1997 SE 9702895
(71) Applicant: SYDKRAFT AB, S-205 09 Malmö (SE)
(72) Inventor: Nilsson, Lars, 24735 Södra Sandby (SE); Lövquist, Thomas, 233 34 Svedala (SE)
(74) Representative: Berglund, Gustav Arthur

(57) **Abstract**

A system for remote reading of an electricity meter (9) comprises a central reading unit (1), which is connected to a telecommunication network (2), to which also the electricity meter (9) is connected via a registering device (6). The registering device (6) comprises one or more registers (11; 12) for storing accumulated values, a line listener (14) for recognising a call from the central reading unit (1), and a tone code sender (7), which when a call from the central reading unit (1) is recognised is adapted to send, by direct connection with the subscriber's telephone line (5), the accumulated consumption value or values stored in the register (11; 12) in the form of tone code signals to the central reading unit (1).

## Description

The present invention relates generally to a system for remote reading via the telecommunication network of a meter for a utility, such as electrical energy, heat, gas or water, with a utility subscriber.

Such systems are known and may comprise a central reading unit at a utility supplier and a registering device associated with the meter and intended for registration of the subscriber's utility consumption, measured by the meter. This registering device is connectible to the reading unit via a telephone line connected to the subscriber and intended for other telephone equipment, a telephone line connected to the reading unit, and a telecommunication network capable of interconnecting these telephone lines.

The prior-art systems are usually complicated in one or more respects. For example, regarding electrical energy they may be designed to store the power consumption hour by hour during a plurality of days when the electricity price follows a time tariff, for instance, different prices for different periods of the day. In most cases, use is here made of a memory with 31x24 memory locations, i.e. 1 memory location for every hour of the day for 31 successive days. The electricity meter also has a pulse generator for generating pulses in correspondence with energy consumed (for instance 1 pulse per 0.01 kWh) and a clock which directs the pulses to the memory location concerned. It will be appreciated that remote reading of a memory of this kind is time-consuming.

Another factor which makes many prior-art remote reading systems complicated and expensive is the use of modems for the communication between the central reading unit and the subscriber's registering device. Modems also act prolonging on the transmission time in consequence of signal transformations, handshake procedures, data protocols etc.

The object of the present invention therefore is to provide a remote reading system of the type stated by way of introduction, which using a relatively simple technique still allows rapid reading of a utility meter.

This object is achieved by a remote reading system according to appended claim 1. Preferred embodiments of the remote reading system appear from the dependent claims.

According to the invention, the central reading unit of the remote reading system thus is connectible directly to the associated telephone line and is adapted to initiate a reading of an individual subscriber's meter by a call of the subscriber in the form of tone code signalling comprising the central reading unit's own call number.

Moreover, the registering device of the remote reading system comprises first, a register for storing accumulated consumption of the utility, second, a line listener for recognising a call from the central reading unit by recognising the central reading unit's own call number in the received tone code signal, and third, a tone code sender which is adapted to be activated when the line listener recognises a call from the central reading unit in order to send, by direct connection with the subscriber's connection line, the value, stored in the register of the registering device, of accumulated consumption to the central reading unit in the form of tone code signalling.

Finally, the central reading unit is arranged for direct receiving of the tone code signal transmitted via the telecommunication network from the subscriber's tone code sender for registering the subscriber's accumulated consumption of the utility on the occasion of reading.

In a preferred embodiment, the tone code sender is arranged for two-tone signalling, preferably so-called DTMF signalling, where each digit is represented by a unique combination of two tone frequencies.

In the case where the price of the utility differs for different periods, the subscriber's registering device may comprise a corresponding number of registers for registering the accumulated consumption for the different periods. The tone code sender is suitably adapted to consecutively send, when activated, the accumulated values registered in the registers of the registering device to the central reading unit.

It will be appreciated that the invention utilises the fact that transmission of a relatively small amount of information places lower demands on the actual transmission technique, which results in less time required for transmission in consequence of a smaller amount of information as well as a simpler transmission technique. The number of readings can thus be increased without increasing the total time required, which allows efficient reading of many meters at low cost and/or more frequent reading of the meters.

The rapid transmission also has the advantage that other signalling via the telecommunication network on the subscriber's telephone line need not to be interrupted.

By the line listener making an early recognition of a call signal to be coming from the central reading unit, it is possible to prevent the subscriber from being disturbed by the call signal.

An embodiment of the invention, which concerns remote reading of the consumption of electrical energy, will be described below with reference to the accompanying drawing, which shows a block diagram of the embodiment.

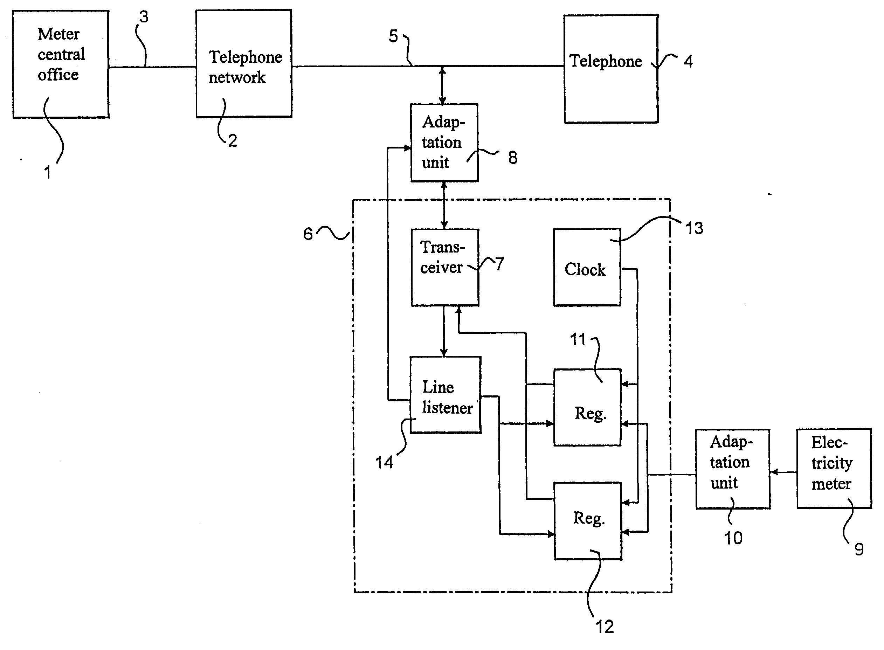

The remote reading system in the drawing comprises a meter central office 1, which is a central reading unit and is connected to a telecommunication network 2, via a telephone line 3. Via the telecommunication network 2, the meter central office 1 can call anyone of a plurality of subscribers connected to the telecommunication network 2. Only one such subscriber is shown in Fig. 1 by means of a block for a telephone 4, which via a line 5 is connected to the telecommunication network 2.

A registering device 6 is connected to the line 5 via a transceiver 7 comprising a tone code sender, and an adaptation unit 8 and is connected to an electricity meter 9 via a second adaptation unit 10.

The electricity meter 9 can be a conventional electricity meter with a pulse generator for generating a pulse for each increase of the power consumption by a predetermined amount of energy, for instance 0.01 kWh. The registering device 6 thus receives via the adaptation unit 10 a pulse train with a pulse frequency varying according to the instantaneous size of the consumption, each pulse representing a predetermined amount of energy.

In the shown embodiment of a remote reading system according to the present invention, the registering device 6 comprises two registers 11 and 12, which are adapted to accumulate the pulses coming from the electricity meter 9 in such a manner that in the register 11 the pulses are accumulated which are generated in the interval or intervals when the electricity price has a lower value, and in the register 12 the pulses are accumulated which are generated during the remainder of the time, i.e. in the separate interval or intervals when the electricity price has a higher value. This separation of the pulses from the electricity meter 9 is carried out by means of a clock 13 which is adapted to direct the pulses from the adaptation unit 10 to the registers 11, 12 in accordance with the predetermined separate intervals for the respective electricity prices.

The registering device 6 further comprises a line listener 14, which has an input connected to the transceiver 7 and an output connected to inputs of the registers 11 and 12 for effecting output of the contents of the respective registers to the transceiver 7. The line listener 14 is adapted to sense signals appearing on the line 5 and, when recognising a predetermined signal, first actuate the adaptation unit 8 such that the impedance thereof changes and, for the telecommunication network 2, simulates lifting of the receiver of the telephone 4, whereby no ring signal is generated.

After this change of impedance, the registers 11 and 12 are made by the line listener 14 to transmit their values to the transceiver 7 for transmission to the meter central office 1 via the lines 5, 3 and the telecommunication network 2 in the form of tone code signals, preferably DTMF signals.

The remote reading system described above operates as follows.

The meter central office 1 initiates a remote reading by calling the subscriber with the telephone 4. The line listener 14 senses and identifies the telephone number of the meter central office 1, which in the form of a tone code signal, preferably a DTMF signal, precedes the signal for activating the ring signal of the subscriber called. Thus the line listener 14 can adjust the impedance of the adaptation unit 8 and prevent a ring signal from having time to be generated.

Subsequently, the line listener 14 activates a transmission of the accumulated values of the registers 11, 12 via the DTMF transceiver 7 to the meter central office 1, where the accumulated value as well as information on the time of the transmission and the subscriber's telephone number are stored.

Finally, the connection is cleared, whereby the adaptation unit 8 returns to its normal position in respect of the impedance shown towards the telecommunication network.

It will be appreciated that a plurality of modifications of the above embodiment of the remote reading system are feasible within the scope of the invention as defined by the appended claims. Thus, the number of registers can vary from a single one to more than the two exemplifying registers 11, 12. It goes without saying that the central reading system is also usable for reading other utilities than electrical energy, as has also been mentioned by way of introduction.

## Claims

1. A system for remote reading of a meter (9) for metering the consumption of a utility, such as electrical energy, heat, gas or water, with a utility subscriber, said system comprising a central reading unit (1) at a supplier of the utility and a registering device (6) associated with the meter (9) and adapted to register the subscriber's consumption of the utility measured by the meter (9), said registering device (6) being, via a telephone line (5) which is connected to the subscriber and which is intended for other telephone equipment (4), and a telecommunication network (2), connectible to a telephone line (3) connected to the reading unit (1),
**characterised** in
that the central reading unit (1) is connectible directly to the associated telephone line (3) and is adapted to initiate a reading of an individual subscriber's meter (9) by a call of the subscriber in the form of tone code signalling comprising the call number of the central reading unit (1),
that the registering device (6) comprises a register (11; 12) for storing the accumulated consumption of the utility,
that the registering device (6) further comprises a line listener (14) for recognising a call from the central reading unit (1) by recognising the call number of the central reading unit (1) in the received tone code signal,
that the registering device (6) further comprises a tone code sender (7) which is adapted to be activated when the line listener (14) recognises a call from the central reading unit (1) in order to send, by direct connection with the subscriber's connection line (5), the value, stored in the registers (11; 12) of the registering device (6), of the accumulated consumption to the central reading unit (1) in the form of tone code signalling, and
that the central reading unit (1) is arranged for direct receiving of the tone code signal, transmitted via the telecommunication network (2), from the subscriber's tone code sender (7) for registering the subscriber's accumulated consumption of the utility on the occasion of reading.

2. A remote reading system as claimed in claim 1, **characterised** in that the tone code sender (7) is arranged for DTMF signalling.

3. A remote reading system as claimed in claim 1 or 2, **characterised** in that the subscriber's registering device (6) comprises at least two registers (11, 12) for registering the accumulated consumption in different intervals, and that the tone code sender (7), when activated, is adapted to consecutively transmit the values, accumulated in the registers (11, 12) of the registering device (6), to the central reading unit (1).

4. A remote reading system as claimed in claim 3, **characterised** by a clock (13) for directing the input of signal pulses corresponding to the instantaneous consumption of the utility from the meter (9) to the registers (11, 12) of the registering device (6) in separate intervals, which each correspond to an individual price of the utility.

5. A remote reading system as claimed in any one of claims 1-4, **characterised** in that the meter (9) is an electricity meter.

6. A remote reading system as claimed in any one of claims 1-5, **characterised** in that the tone code sender (7) is part of a transceiver connected between the subscriber's telephone line (5) and the line listener (14).
